# EUROPEAN PATENT APPLICATION

(11) **EP 1 612 475 A1**
(43) Date of publication of application: **04.01.2006**
(21) Application number: 05254169.5
(22) Date of filing: 01.07.2005
(51) Int. Cl.: F21V 17/08, F21V 21/03

(54) **Fitting**

(30) Priority: 01.07.2004 GB 0414759
(71) Applicant: Artex Rawlplug Limited, Loughborough, Leicestershire LE12 6HX (GB)
(72) Inventor: Cadden, Stephen, Glasgow G468JR (GB); Wallace, Thomas Campbell, Glasgow G468JR (GB)
(74) Representative: Jones, Keith William

(57) **Abstract**

The present invention relates to fittings, particularly but not exclusively, light fittings for use as decorative covers.

The fitting (10) is adapted to attach, in use, to a flex (74) hanging from a ceiling. The fitting (10) itself comprises a body which includes first (12) and second (14) body sections, the first (12) and second (14) body sections being hingedly connected together by a hinge (42,44) having a hinge axis (H), such that said body sections are hingedly movable from a first open position, where the body is open to receive a flex (74), and a second closed position, where the body is closed to grip a flex (74). The hinge axis (H) is substantially perpendicular to a central axis of the flex (74) from which the fitting (10) attaches in use.

## Description

The present invention relates to fittings, particularly but not exclusively, light fittings for use as decorative covers.

Fittings are known which attach to a flex or cord that is suspended from a ceiling. They are used in order to conceal the attachment point of the flex to the ceiling and provide an attractive and decorative finish.

Fittings are known that attach to the flex by simple frictional action, i.e. the fittings grip the cord only and no further attachment is required by way of adhesives, mechanical fasteners or the like. Such a device is disclosed in International Patent Application No PCT/DK94/00492.

According to a first aspect of the present invention there is provided a fitting adapted to attach in use to a flex hanging from a ceiling, the fitting comprising a body which includes first and second body sections, the first and second body sections being hingedly connected together by a hinge having a hinge axis, such that said body sections are hingedly movable from a first open position, where the body is open to receive a flex, and a second closed position, where the body is closed to grip a flex, and where the hinge axis is substantially perpendicular to a central axis of the flex from which the fitting attaches in use.

Preferably the fitting further includes locking means to hold the body in the second closed position. More preferably the locking means allow the body to be held in a third position, the third position being between the first open position and the second closed position.

Preferably the first and second body sections are substantially identical in configuration.

Preferably the first and second body parts are selectively detachable from one another.

Preferably a first hinge piece is provided on the first body part and a second hinge piece on the second body part, both hinge pieces being adapted to form a hinge when suitably connected. More preferably the fitting is provided with two hinges located at distal ends of the hinge axis on the body. Further, it is preferable if the first and second body parts are each provided with first and second hinge pieces, and each hinge piece on one of said body parts is connectable with a corresponding hinge piece on the other of said body parts.

In a preferred embodiment, the first and second body sections are provided with a curved mating face, preferably of an S-shape, adapted to allow an aperture to form in the fitting when in the open position. The aperture is of sufficient size to allow an item connected to a flex, such as a light bulb or light bulb socket, to pass through the fitting. However, it will be appreciated that this may be varied without departing from the scope of the present invention.

An embodiment of the present invention will now be described, by way of example only, with reference to the following drawings, in which:
Fig. 1 is a plan view of a fitting according to the present invention in a closed position;
Fig. 2 is a perspective view of the fitting of Fig. 1, disassembled into its first and second body sections;
Fig. 3 is a perspective view of the fitting of Fig. 1 with the first and second body sections hinged at an angle between an open position and a closed position;

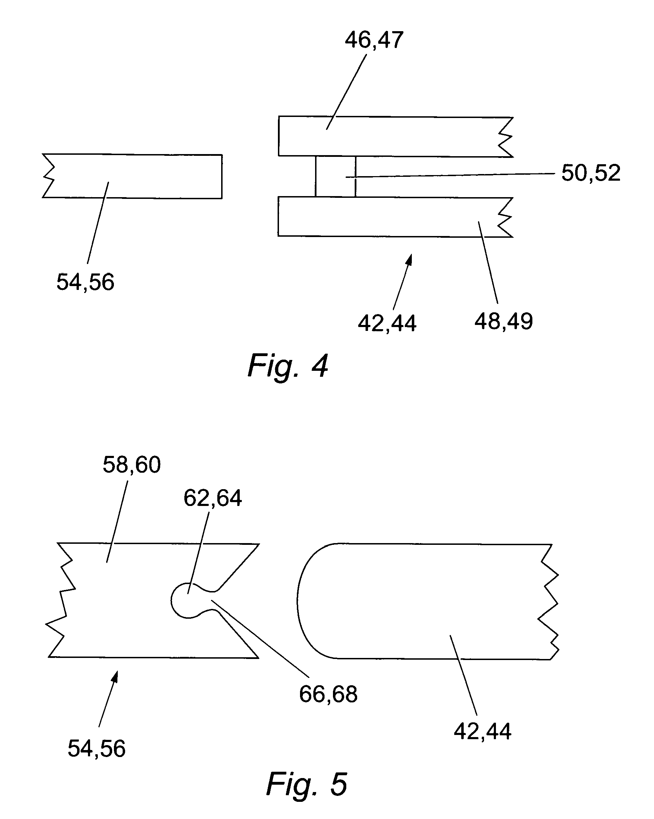

Fig. 4 is a plan view showing detail of a hinge mechanism of the fitting of Fig. 1;
Fig. 5 is a side showing detail of the hinge mechanism of Fig. 3;
Figs. 6 to 8 show detail of the fitting of Fig. 1 being attached to a flex.

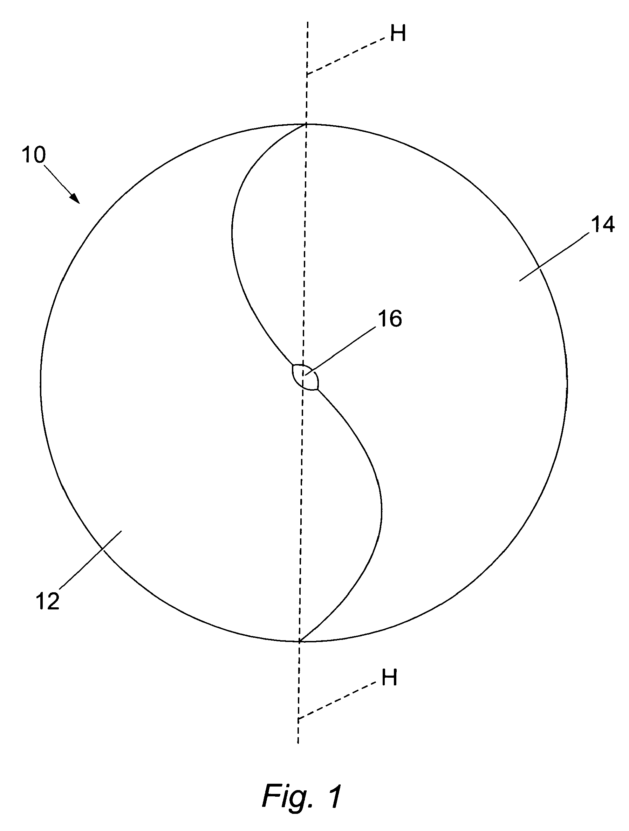

Referring to the drawings and initially to Fig. 1 there is shown a fitting generally referred to as 10.

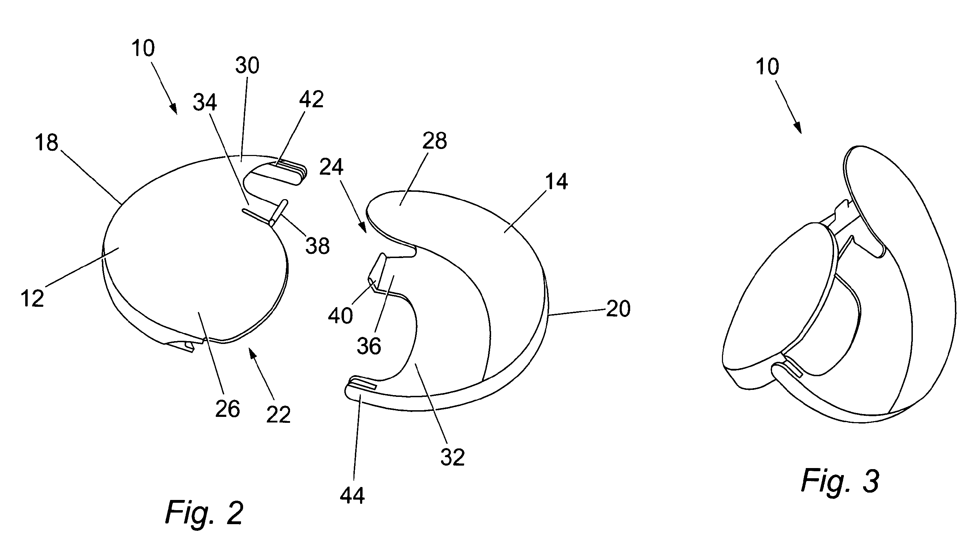

The fitting 10 is generally circular in shape and comprises a first body section 12 and a second body section 14. Both body sections 12,14 are identical in configuration in this particular embodiment. This identity can be seen more clearly in Fig. 2.

The fitting 10 has a generally semi-spherical outer surface and the junction between the two body sections resembles a raised "S" on the surface. A small aperture 16 is provided at the centre of the fitting 10, defined by the shape of the two body sections 12,14.

Each body section 12,14 is generally semi-circular in shape, but rather than having a curved edge and a straight edge, each body section has a curved edge 18,20 and a generally S-shaped edge 22,24. The generally S-shaped edge 22,24 has a projecting semi-circular portion 26,28 and a semi-circular cut-out portion 30,32. The projecting semi-circular portion 26,28 is raised above the semi-circular cut-out portion 30,32.

Extending from the semi-circular cut-out portion 30,32 adjacent the projecting semi-circular portion 26,28, is a clip 34,36. The clip 34,36 is generally rectangular in shape and projects away from the curved edge 18,20. At the distal end of the clip 34,36 is an angled return section 38,40.

On the circumference of each body section 12,14 extending adjacent the semi-circular cut-out portion 30,32 is a first hinge piece 42,44. The first hinge piece 42,44 comprises two hinge lobes 46,47,48,49 which are similar in configuration and are spaced a short distance apart from each other. The two hinge lobes 46,47,48,49 are substantially parallel to each other. A circular cross section hinge rod 50,52 is joined at either end to each of the two hinge lobes 46,47,48,49.

At the opposite end of the body section 12,14 to the first hinge piece and adjacent the projecting semi-circular portion 26,28 there is provided a second hinge piece 54,56. The second hinge piece 54,56 is co-operable with the first hinge piece 42,44 and comprises a flat plate member 58,60 with a semi-circular cut-out section 62,64. The flat plate member 62,64 is relatively thin and can be no thicker than the gap between the hinge lobes 46,48 if the hinge mechanism is to work. The cut-out section 62,64 has a diameter similar to that of the hinge rod 50,52.

When assembled, the hinge rod 50,52 is located within the cut-out section 62,64 and the circular shapes of the rod 50,52 and cut-out section 62,64 allow the body sections 12,14 to hinge with respect to one another about a hinge axis H.

It is envisaged that the fitting 10 may be supplied with the two body parts 12,14 separate and prior to installing the fitting 10, the user assembles it by lining up the hinge rods 50,52 with the cut-out sections 62,64 and pushing the rods 50,52 into the cut-out sections 62,64. Since the fitting 10 is made from a resilient material, such as a plastics material, the rods 50,52 can be forced through the narrow necks 66,68 which leads to the cut-but sections 62,64 and are then held within the cut-out sections 62,64 by the narrow necks 66,68.

When assembled, the user positions the two body sections 12,14 at an angle to one another in an open position as shown in Fig. 2.

As can be seen from Fig. 2, this provides a gap between the first body section 12 and the second body section 14.

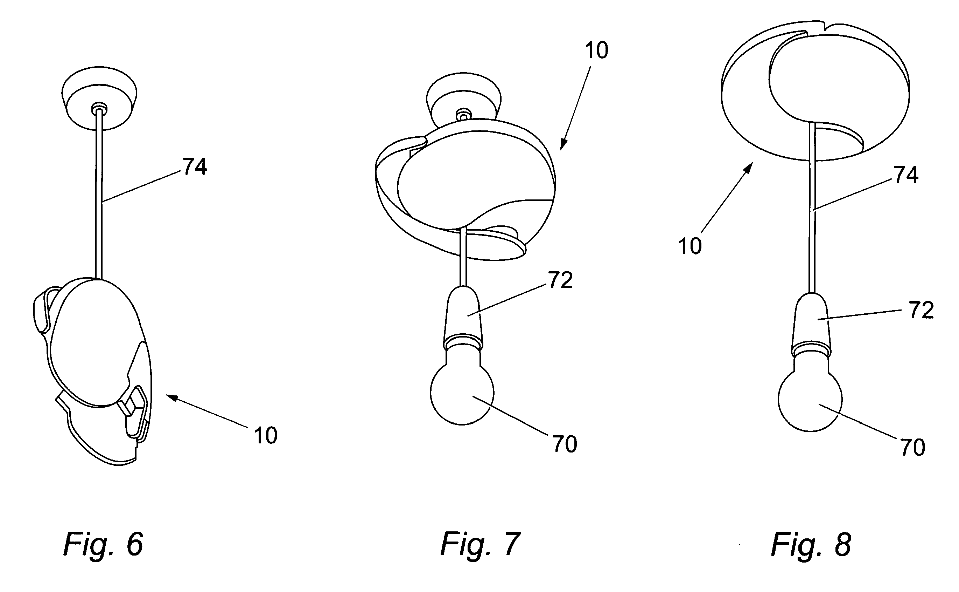

Referring to Figs. 6 to 8 there is shown a light bulb 70 which is attached to a socket 72 which is in turn attached to a flex 74. The flex 74 is suspended from a ceiling. Depending on the size of the fitting 10 and specifically the gap that forms between the two body sections 12,14 by hinging them at an angle with respect to one another, the user is able to feed either the whole light bulb 70 through the fitting 10 or, with smaller versions of the fitting 10, the user only has to remove the light bulb 70 in order to feed the socket 72 and flex 74 through the fitting 10.

The fitting 10 is then pushed upwards until it is near the ceiling. The user then hinges the body sections 12,14 about the hinge axis towards a flat configuration. The clips 34,36 engage the inner surface of the projecting semi-circular portions 26,28. As the clips 34,36 are also resilient, they bend slightly as the angled return sections 38,40 engage the inner surface. Two grooves (not shown) are provided on the inner surface of the projecting semi-circular portions 26,28 on each body section 12,14, both of which are co-operable with the angled return sections 38,40 of the clips 34,36. As the body sections 12,14 are hinged towards a flat configuration, the angled return sections 38,40 of the clips 34,36 engage first grooves (not shown). As can be seen in Fig. 7, this holds the two body sections 12,14 at a second open hinge angle (the third hinge angle).

In this position the flex 74 is located in the aperture 16 of the fitting 10, but is not gripped by the fitting 10 and the fitting 10 is still able to move with respect to the flex 74.

As can be seen, the hinge axis H is substantially perpendicular to a central axis of the flex 74.

Finally, the user pushes the two body sections 12,14 towards a flat configuration (see Fig. 8). In this configuration the fitting 10 is in a closed position and abuts the ceiling. In this position the angled return sections 38,40 of the clips 34,36 engage second grooves (not shown) located further back from the first grooves. The engagement of the angled return sections 38,40 of the clips 34,36 and the second grooves (not shown) holds the fitting 10 in this closed position.

Since the smallest dimension of the aperture 16 is less than that of the diameter of the flex 74, in the closed position the flex 74 is tightly gripped within the aperture 16 such that the frictional force between the flex 74 and the edge of the aperture 16 supports the fitting 10.

The present invention therefore provides a fitting which is easily installed and requires no further fixing means to enable it to abut a ceiling and cover the attachment point for a flex to said ceiling.

The invention is not limited to the embodiment herein described but may be modified in both construction and detail.

## Claims

1. A fitting adapted to attach in use to a flex hanging from a ceiling, the fitting comprising a body which includes first and second body sections, the first and second body sections being hingedly connected together by a hinge having a hinge axis, such that said body sections are hingedly movable from a first open position, where the body is open to receive a flex, and a second closed position, where the body is closed to grip a flex, and where the hinge axis is substantially perpendicular to a central axis of the flex from which the fitting attaches in use.

2. A fitting according to Claim 1 further including locking means to hold the body in the second closed position.

3. A fitting according to Claim 2 wherein the locking means allow the body to be held in a third position, the third position being between the first open position and the second closed position.

4. A fitting according to any preceding claim wherein the first and second body sections are substantially identical in configuration.

5. A fitting according to any preceding claim wherein the first and second body parts are selectively detachable from one another.

6. A fitting according to any preceding claim wherein a first hinge piece is provided on the first body part and a second hinge piece on the second body part, both hinge pieces being adapted to form a hinge when suitably connected.

7. A fitting according to any preceding claim further including two hinges located at distal ends of the hinge axis on the body.

8. A fitting according to any preceding claim wherein the first and second body parts are each provided with first and second hinge pieces, and each hinge piece on one of said body parts is connectable with a corresponding hinge piece on the other of said body parts.

9. A fitting according to any preceding claim wherein the first and second body sections are provided with a curved mating face adapted to allow an aperture to form in the fitting when in the open position.

10. A fitting according to Claim 9 wherein the curved mating face is substantially S-shaped.
